# EUROPEAN PATENT APPLICATION

(11) **EP 1 193 022 A2**
(43) Date of publication of application: **03.04.2002**
(21) Application number: 01301560.7
(22) Date of filing: 21.02.2001
(51) Int. Cl.: B23K 20/12

(54) **Friction stir welding**

(30) Priority: 29.08.2000 JP 2000259053
(71) Applicant: Hitachi, Ltd., Chiyoda-ku, Tokyo 101-8010 (JP)
(72) Inventor: Ezumi, Masakuni, c/o Hitachi, Ltd., Chiyoda-ku, Tokyo 100-8220 (JP); Fukuyori, Kazushige, c/o Hitachi K. K. Co., Ltd., Kundamatsu-shi, Yamaguchi 744-0002 (JP); Okamura, Hisanori, c/o Hitachi, Ltd., Chiyoda-ku, Tokyo 100-8220 (JP)
(74) Representative: Paget, Hugh Charles Edward

(57) **Abstract**

Friction stir welding of a tubular structure, such as a pair of hollow members is performed without deformation of the shape of the structure. Face plates 11b, 12b of a hollow member 10 are butted against face plates 21b, 22b of a second hollow member 20. The end surfaces of the face plates 11b, 12b have concave portions 16, and the end surfaces of the face plates 21b, 22b have convex portions 26 inserted to the concave portions. At outer sides of the face plates 11b, 12b, 21b and 22b, there are outward convex portions 15, 25. A rotary tool 50 having a small diameter portion 51 between two large diameter portions 53, 54 performs friction stir welding with the region being welded between the two large diameter portions 53, 54. By this method, stress toward the centre of the hollow members 10, 20 does not exist.

## Description

### FIELD OF THE INVENTION

The present invention relates to a method of friction stir welding of a tubular structure, such as a pair of hollow members or a tube, and to the welded tubular structure obtained. It further relates to a hollow member for use in the method.

### DESCRIPTION OF THE RELATED ART

Friction stir welding is a technique using a round shaft (here called a rotary tool) which is inserted into the welding region of two members and moved along the welding line while rotating, thereby heating, mobilizing and plasticising the welding region, and realizing a solid-phase welding of the members. The rotary tool has a large diameter portion and a small diameter portion. The small diameter portion is inserted into the members to be welded, and the end surface of the large diameter portion is in contact with at least one of the members. A screw thread may be formed on the small diameter portion. This technique is disclosed in Japanese Patent No. 2,712,838 (US 5,460,317), and Japanese Patent National Publication of PCT Application No. 9-508073 (EP 0752926).

The rotary tool must be inserted into the metal in the welding region, which is therefore subjected to intense stress. Therefore, in order to weld hollow members together, a location where the two face plates of one hollow member are connected by a transverse connecting plate is selected as the region to be friction stir welded to another hollow member. The friction stir welding is performed while the load applied is supported by the connecting plate, in order to prevent deformation of the hollow members. This technique is disclosed in JP-A-11-90655 (US 6,050,474).

### SUMMARY OF THE INVENTION

The technique disclosed in JP-A-11-90655 (US 6,050,474) enables friction stir welding while preventing deformation of the hollow members. However, the connecting plate must exist at the region to be friction stir welded, so that the location for the friction stir welding or the shape of the hollow members is restricted. This results in increase in weight of the hollow members.

The object of the present invention is to provide a friction stir welding method of tubular structure such as a pair of hollow members and the like, which does not deform the shape of the structure during the friction stir welding.

The present invention is characterized by butting a face plate of a hollow member against a plate to be welded thereto, and performing friction stir welding while positioning the butted region between two large diameter portions of a rotary tool.

### BRIEF DESCRIPTION OF THE DRAWINGS

FIG. 1 is a cross-sectional view of a pair of hollow members according to one embodiment of the present invention;
FIG. 2 is an enlarged cross-sectional view of a region to be welded of the hollow members in FIG. 1;
FIG. 3 is a cross-sectional view during welding in FIG. 1;
FIG. 4 is a cross-sectional view after welding in FIG. 1;
FIG. 5 is a disassembled cross-sectional view of a rotary tool in FIG. 1;
FIG. 6 is a perspective view of a car body of a railway car; and
FIG. 7 is a front view of another embodiment of the present invention.

### DETAILED DESCRIPTION OF PREFERRED EMBODIMENTS

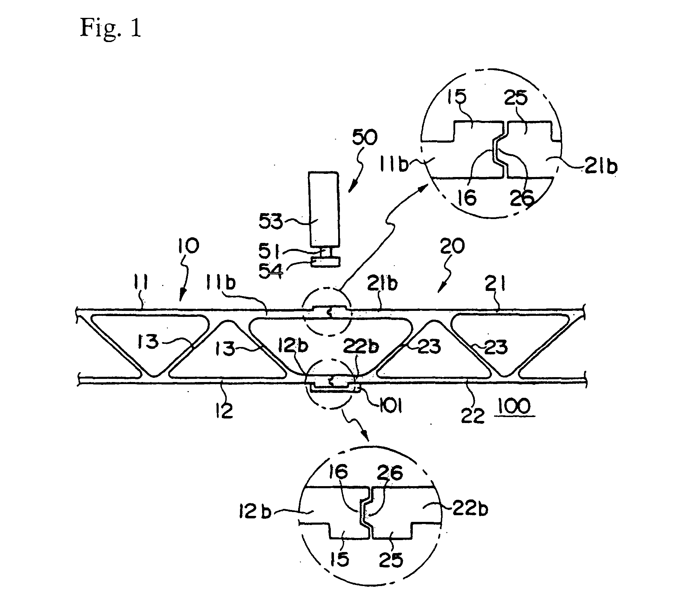

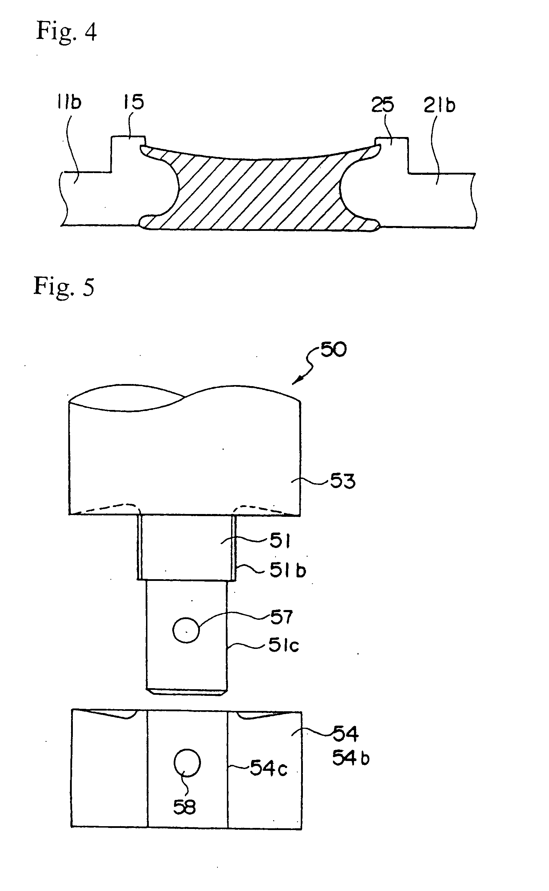

A preferred embodiment of the present invention will now be explained with reference to FIGS. 1 through 6. In FIG. 4, the shape of the welding region or the friction stir area shown by the cross-hatching is shown as an illustrative example.

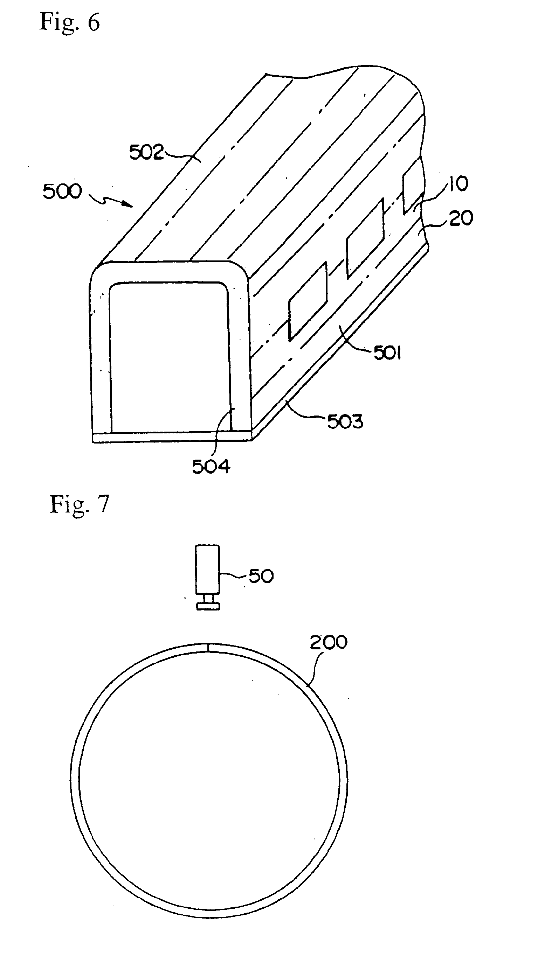

A car body 500 of a railway car shown in FIG. 6 is comprised of a pair of side structures 501 constituting the sides, a roof structure 502 constituting the roof, an underframe 503 constituting the floor, and an end structure 504 constituting the end portion in the longitudinal direction. The side structure 501, the roof structure 502, and the underframe 503 are formed by welding plural extruded members 10, 20, respectively. The longitudinal direction (extrusion direction) of the extruded members 10, 20 is in the longitudinal direction of the car body 500. The extruded members 10, 20 are hollow members made of aluminum alloy.

The structure of the hollow members 10, 20 constituting the side structure 501 will now be explained. The same applies to the hollow members used in other structures of the car.

The hollow member 10 (20) is comprised of two substantially parallel face plates 11 (21), 12 (22), and plural connecting plates 13 (23) connecting the two face plates. The connecting plates 13 (23) are inclined from face plates 11 (21), 12(22). That is, the face plates 11 (21), 12 (22) and the connecting plates 13 (23) constitutes a truss.

The end portion in the width direction of the hollow member 10 (20) protrudes from the junction of the connecting plate 13 (23) and the face plates 11, 12 (21, 22) so as to form projecting face plates 11b, 12b (21b, 22b). The outer surfaces of the face plates 11b, 12b (21b, 22b) mainly lie in the same plane as or are flush with the outer surfaces of the face plates 11, 12 (21, 22). The thickness of the face plates 11b, 12b (21b, 22b) is more than the thickness of face plates 11, 12 (21, 22).

To the end portions of the face plates 11b, 12b (21b, 22b), there is provided a convex portion or rib 15 (25) projecting in the outer surface direction (outer side in the thickness direction) of the hollow member 10, 20. Also, a concave portion or recess 16 is formed on the end surfaces of the face plates 11b, 12b. At the end surfaces of the face plates 21b, 22b of the other hollow member 20, there is provided a convex portion or rib 26 to be inserted into the concave portion 16. In order to ease insertion of the convex portion 26 to the concave portion 16, the concave portion 16 and the convex portion 26 have a trapezoid shape. When inserted, there exists some gap between the bottom surface of the concave portion 16 and the leading end of the convex portion 26.

Friction stir welding is performed when the concave portion 16 and the convex portion 26 are fitted together. Therefore, this welding could be said to be a welding of a tubular portion comprised of face plates 11, 21 (12, 22) and connecting plates 13, 23. In this case, the tube may not be a complete tube. For example, the welding region in a case such as welding a plate to the end portion of the face plate 11 of the hollow member 10 could be called welding of a tube. That is, more generally a case where a supporting member for supporting the insertion force of the rotary tool does not exist at the welding region is called welding of a tube.

Each of the end surface 17 of the face plates 11, 12 of the hollow member 10 lie on a line orthogonal to the surface of the face plates 11b, 12b (on a line along the thickness direction of the hollow member). The two end surfaces 17 lie on the same line.

Each of the end surfaces 27 of the face plates 21, 22 of the hollow member 20 exists on a line orthogonal to the surface of the face plates 21b, 22b (on a line along the thickness direction of the hollow member). The two end surfaces 27 lie on the same line. The projections of the convex portions 26 are equal in size.

The overlap of the concave portion 16 and the convex portion 26 of the face plates 12b, 22b on the lower side may be formed to be larger than the overlap of the concave portion 16 and the convex portion 26 of the face plates 11b, 21b on the upper side. By doing so, the concave portion 16 and the convex portion 26 on the upper side are fitted together after the concave portion 16 and the convex portion 26 on the lower side are fitted together, so that fitting on the upper side could be performed with ease.

The length of the face plate from the connecting plate at the end portion of the hollow member 10 to the connecting plate 23 of the other hollow member is longer than the length of the face plate constituting a truss in other areas. Therefore, the thickness of the face plates 11b, 12b, 21b and 22b at the welding region is thickened slightly.

The rotary tool 50 includes large diameter portions 53, 54 on both sides of a small diameter portion 51 in the axial direction. The friction stir welding is performed by rotating the rotary tool 50 while interposing the region to be welded between the two large diameter portions 53, 54. The outer surface of the small diameter portion 51 is provided with a male screw thread. At the upper end of the rotary tool 50, there is provided a driving device for rotating and moving the tool. Of the two large diameter portions 53, 54, the upper large diameter portion 53 is called a large diameter portion 53 on the base axis side (or on the driving device side). The lower large diameter portion 54 is called a large diameter portion 54 on the leading end side.

The rotary tool 50 is comprised of a cylindrical rod 50b including the large diameter portion 53 and the small diameter portion 51, and a member 54b for the large diameter portion 54 on the leading end. The cylindrical rod 50b includes, from the base end side, the large diameter portion 53 having a circular outside diameter, a small diameter screw threaded portion 51b, and a small diameter axis portion 51c for installing the member 54b of the large diameter portion 54. The axis portion 51c is provided with a pin hole 57 for fixing the member 54b.

The member 54b corresponding to the large diameter portion 54 has a circular circumference, and is equipped with a hole 54c fitting with the axis 51c, and a pin hole 58. Each of the end surfaces of the large diameter portions 53, 54 on the side of the screw portion 51b has an inclined annular concavity as is illustrated in FIG. 5. The concavity exists for the function of keeping the stirred metal to the radially inner side, and preventing outflow of the metal to exterior.

After producing the parts as is explained above, the member 54b corresponding to the large diameter portion 54 is fitted to the axis 51c, and the member 54b is fixed by fitting a knock pin 59 to the pin holes 57, 58. The member 54b becomes the large diameter portion 54.

The length L of the small diameter portion 51 (distance from the end surface of the large diameter portion 53 to the end surface of the large diameter portion 54) is smaller than the thickness t of the member to be welded (including the convex portions 15, 25). The diameter D of the large diameter portion 53 is smaller than the width W of the two convex portions 15, 25 added together.

Next, the welding process of the two hollow members will be explained. Two hollow members 10, 20 are placed on a bed 100, and the face plates 11b, 12b of the member 10 are abutted against the face plates 21b, 22b of the other member 20. By doing so, the convex portions 26 of the face plates 21b, 22b enter the concave portions 16 of the face plates 11b, 12b. The hollow members 10, 20 are fixed to the bed 100 in such state. Also, the upper convex portions 15, 25 are arc welded together intermittently, to provide temporary securing.

Under this condition, the rotary tool 50 is rotated and moved from the end surface in the longitudinal direction of the hollow members 10, 20, and holds the region to be welded between the two large diameter portions 53, 54 (with the small diameter portion 51 inserted in the members). The region to be welded is welded with the movement of the rotary tool 50.

After completing the welding on the side of the face plates 11, 21, the hollow members 10, 20 are turned upside down, and are fixed on the bed 100 with the face plates 11, 21 downward. The butted region of the face plates 12b, 22b is then subjected to friction stir welding in the same manner.

During friction stir welding, the axis of the rotary tool 50 is slightly inclined, as is known in the art. The axis of the rotary tool is inclined rearward with respect to the direction of movement of the rotary tool 50 along the welding line, so that the front end of the upper large diameter portion 53 (front in the direction of movement mentioned above) is positioned upward relative to the rear end (rear in the direction of movement mentioned above).

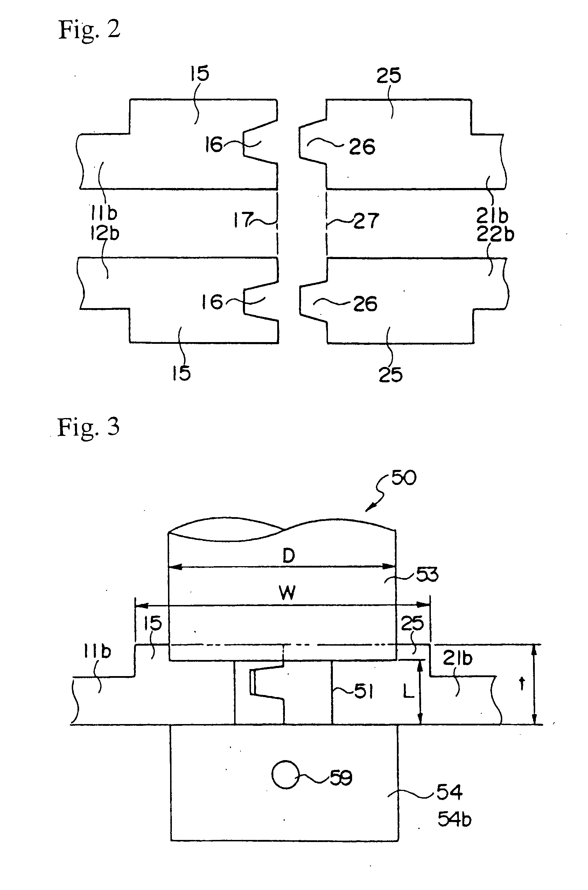

The rear end of the upper large diameter portion 53 is positioned inside the convex portions 15, 25, in that the rear end of the large diameter portion 53 is positioned above the level outer surfaces of the face plates 11b, 21b adjacent the convex portions 15, 25 as illustrated in FIG. 3.

Consequently, the completed friction stir welded surface on the upper side is positioned upward from the upper surfaces of the face plates 11b, 21b (12b, 22b). When using the upper surfaces of the face plates 11, 21 as the outer surfaces of the car body, remaining parts of the convex portions 15, 25 are cut off to achieve a smooth outer surface flush with the face plates 11b, 21b. The convex portions 15, 25 at the inner side of the car body are cut off according to need.

In the friction stir welding, the gap in the region to be welded (for example, a gap between the concave portion 16 and the convex portion 26, a gap between the end surface 17 and the end surface 27) is filled by metal from the convex portions 15, 25 as the source. Residual metal is ejected from the perimeter of the large diameter portion 53. It is easy for such as gap to be formed, because the length of the car body 500 may be approximately 20 meters.

The large diameter portion 54 of the leading end is positioned below the face plates 11b, 21b. The front end of the large diameter portion 54 scrapes the lower surface of the face plates 11b, 21b slightly, but the metal is raised slightly at the rear end of the large diameter portion 54. The metal is raised downwardly as shown in FIG. 4.

The length of the car body 500 may be approximately 20 m, so that the face plates 11b, 12b, 21b and 22b tends to deform slightly in the thickness direction of the hollow members 10, 20. However, the two face plates 11b, 21b are fitted together at the concave portion 16 and the convex portion 26, so that unevenness caused from the difference of the height position of the end portion of the face plate 11b and the height position of the end portion of the face plate 21b at the region to be welded does not occur. When unevenness occurs, gaps tend to be formed in the interior of the welded region. Therefore, by fitting, a friction stir welding having little defect could be obtained.

During friction stir welding, the two face plates are held between the two large diameter portions 53, 54, so that a stress caused from inserting the rotary tool 50 towards the side of the face plates 12, 22 does not occur during welding of the side of the face plates 11b, 21b. Therefore, the hollow members could be welded without deformation, even though there exists no supporting plate at the welding region.

In the above embodiment, the concave portion 16 is formed on each of the face plates 11b, 12b of the hollow member 10, and convex portion 26 is formed on each of the face plates 21b, 22b of the other hollow member 20. However, it is also possible to form the concave portion 16 on each of the face plates 11b, 22b, and the convex portion 26 on each of the face plates 12b, 21b. Also, it is also possible to form the convex portion 15 on only one member of the abutted region.

The embodiment illustrated in FIG. 7 is a case where end portions butted together by bending a plate circularly are friction stir welded to obtain a cylinder. The same rotary tool 50 is used. When welding with a conventional rotary tool, welding is performed while a supporting member is placed inside the cylinder. Or, welding is performed by positioning the welding region downward, and placing the rotary tool inside the cylinder. In such cases, welding of a small diameter cylinder is difficult, since the placement of a supporting member or a rotary tool is difficult. However, by performing welding by locating the region to be welded between the two large diameter portions, a small diameter cylinder could be welded with simple structure.

The friction stir welding method here described can be applied not only to cylinders, but it could also be applied to tubes bent in square shape and the like. Moreover, it could be applied to cases for welding in the circumferential direction. For example, it could be applied to the case of butting a first tubular member against a second tubular member in the axial direction, and welding the same in the circumferential direction. These tubular members are for example cylinders. In this case, a hole for inserting the large diameter portion 54 of the leading end of the rotary tool is formed at the starting point of the welding, and welding is completed at the position of the hole. After completing the welding, the hole is filled, e.g. by arc welding, or by arc welding a filling plate.

The technical scope of the present invention is not limited to the terms used in the claims or in the summary of the present invention, but is extended for example to the range in which a person skilled in the art could easily substitute based on the present disclosure.

The present invention thus permits friction stir welding without deforming a tubular structure such as hollow members and the like.

## Claims

1. A friction stir welding method, comprising:
butting opposed end portions of plates of a hollow structure assembly; and
using a rotary tool having large diameter portions on both ends of a small diameter portion, rotating and moving said rotary tool along the butted region with the butted region interposed between the two large diameter portions of the rotary tool.

2. A friction stir welding method according to claim 1, wherein:
said end portions at the butted region have respectively opposed concave and convex portions, and are abutted against each other with said convex portion on one member inserted in said concave portion on the other member.

3. A friction stir welding method according to claim 1 or 2, wherein:
an external surface of the end portion of at least one said face plate is provided with an outward convex portion; and
the friction stir welding is performed with inserting the large diameter portion on the outer side of said rotary tool inserted into said outward convex portion.

4. A friction stir welding method, comprising:
butting two face plates of a first hollow member against two face plates of a second hollow member; and
using a rotary tool having large diameter portions on both ends of a small diameter portion, rotating and moving said rotary tool along the butted region with the butted region interposed between the two large diameter portions of said rotary tool.

5. A friction stir welding method according to claim 4, wherein:
the members at each of said butted regions include respectively opposed concave and convex portions, and are abutted against each other with the convex portion on one member inserted in said concave portion on the other member.

6. A friction stir welding method according to claim 4 or 5, wherein:
each of external surfaces of the end portions of said two face plates of said first hollow member and each of external surfaces of the end portions of said two face plates of said second hollow member are provided with an outward convex portion; and
said friction stir welding is performed while inserting the large diameter portion on the outer side of said rotary tool inside said outward convex portions.

7. A friction stir welding method, comprising:
bending a plate to form a tubular shape, and butting one end portion of said plate against the other end portion; and
using a rotary tool having large diameter portions on both ends of a small diameter portion, rotating and moving said rotary tool along the butted region while said butted region is interposed between said two large diameter portions of said rotary tool.

8. A friction stir welding method, comprising:
butting a first tubular member against a second tubular member; and
using a rotary tool having large diameter portions on both ends of a small diameter portion, rotating and moving said rotary tool along the butted region while said butted region is interposed between said two large diameter portions of said rotary tool.

9. A structural body, wherein:
a butted region of end portions of plates at one side of a hollow structure are joined by a friction stir weld;
the friction stir welded region exists on both sides in the direction of thickness of the welded region; and
said friction stir welded region at its side facing the other side of the hollow structure is raised from the surfaces of said plates.

10. A tube, wherein:
a friction stir weld is present in the axial direction of the tube;
the friction stir welded region exists on both sides in the direction of thickness of the welded region; and
the friction stir welded region at the side facing the inner side of said tube is raised from the surface of the plate constituting said tube.

11. A tube, wherein:
a butted region between a first tube portion and a second tube portion is joined by a friction stir weld;
the friction stir welded region exists on both sides in the direction of thickness of the welded region; and
the friction stir welded region at the side facing the inner side of said tube is raised from the surface of plates constituting said tube portion.

12. A hollow member for friction stir welding, wherein:
said hollow member comprises a first face plate, a second face plate substantially parallel to said first face plate, and a plural connecting plates connecting said first face plate and said second face plate;
an end portion of said first face plate and an end portion of said second face plate is protruded in the width direction of said hollow member compared to the connecting region of said connecting plate with said first face plate and said second face plate;
an end surface of said protruded end portion of said first face plate includes a concave portion or a convex portion; and
an end surface of said protruded end portion of said second face plate on the side facing said concave portion or said convex portion includes a concave portion or a convex portion.

13. A hollow member for friction stir welding according to claim 12, wherein each of said first face plate and said second face plate has adjacent said end surface thereof at the outer surface thereof an outward convex portion.
